# EUROPEAN PATENT SPECIFICATION

(11) **EP 2 948 282 B1**
(45) Date of publication and mention of the grant of the patent: **09.10.2024**
(21) Application number: 14708925.4
(22) Date of filing: 24.01.2014
(51) Int. Cl.: B28B 7/38, C08H 8/00, B27K 3/34, B05D 7/06, B05D 5/08

(54) **NOVEL USE OF WOOD SPECIMEN**
NEUARTIGE VERWENDUNG VON HOLZPROBEN
NOUVELLE UTILISATION DE SPÉCIMEN EN BOIS

(30) Priority: 24.01.2013 FI 20135069
(43) Date of publication of application: 02.12.2015
(73) Proprietor: Metsäliitto Osuuskunta, 02100 Espoo (FI)
(72) Inventor: HEIKKONEN, Samuli, FI-44201 Suolahti (FI); SOKKA, Kasperi, FI-44201 Suolahti (FI)
(74) Representative: Laine IP Oy
(86) International application number: PCT/FI2014/050059
(87) International publication number: WO 2014/114850

(56) References cited:
- WO-A1-2009/156594
- US-A- 2 863 364
- US-A- 3 497 375
- US-A- 4 076 569

## Description

The present invention relates to surface treatment of wood objects. In particular, the present invention relates to the use of surface-treated wood objects as casting beds for concrete and similar hardening masses.

Wood panels and solid wood are commonly used as casting surfaces, for example when concrete casting is carried out. An untreated wood surface adheres tightly to the material that is cast. Because of this adherence, it is very difficult to release the wood, which is used in the casting forms, from the concrete surface, without damaging the casting surface or the wood material that is used as the casting form. The adherence significantly increases the work required for detaching the casting surfaces, causing material loss and repair work on the casting surfaces.

The present invention relates to treatment of a wood surface with a highly water-repellent and moisture-insulating substance in a way that makes it easy to detach the wood from the casting surface. The present invention relates to the substance in question (a "release agent"), and to a wood product that is treated with the substance in question.

In previous solutions, the wood used as the casting surface is surface-treated with distillates of fossil-derived crude oil, and mixtures thereof. In known solutions, wood surfaces are treated, for example, with a mixture of two different commercial products: Nynäs Nytex 810 (Distillates petroleum, hydrotreated heavy naphthenic) and Neste engine fuel oil -5/-15.

Published Patent Application WO 2008154421 describes a coating composition, which comprises a fluorine-containing compound and a polycarbodiimide. The composition is applied onto the surface of a substrate such as wood.

US Patent Specification No. 3,497,375 describes a method of treating a wooden form which is used in concrete casting, by coating the surface of the wood. The coating is formed of two layers, in which case, first, a mixture is applied which is comprised of wax and ethylene-vinyl acetate copolymer, and this mixture forms a layer having a thickness of 0.5 to 5 mm. The wax and paraffin oil components of the compositions do not migrate into the wood.

US Published Patent Application No. 2009304939 and Published Patent Application WO 2009004110 describe the application of an aqueous dispersion or aqueous solution of AKD onto a wood surface, thereby improving the hydrophobicity of the wood.

US 2,863,364 discloses a hard oil-hardened fibre board which is adapted to be used as form board or shuttering in the casting of concrete. The fibre board is uniformly impregnated with a hardenable oil and is provided with a layer of a plastic covering the surface thereof which is intended to come into contact with the concrete.

US 4,076,569 discloses a method and apparatus for applying a coating of thermoplastic resin to the surface of low grade plywood panels so as to form smooth surface suitable for use in concrete forms.

WO 2009/156594 A1 discloses a method in which a composition containing a hydrophobic agent is provided onto the surface of the wood board and coating agent is provided over it to form a coating layer.

In previous solutions the detaching properties are either based on oiling the wood surface or based on a similar treatment, in order to improve the detaching properties. The treatment does not render the wood surface itself hydrophobic or otherwise highly water-repellent. It is possible that the detaching is based on the slippery surface of the wood fibre, or the fact that oils are usually not soluble in water.

Wood products which are used in casting for example on a construction site are exposed to rain and to the water that passes from the mass to the wood product. In these conditions, release agents, which are based on fossil-derived oil, migrate with the water to the environment and are of concern regarding environmental damage.

When the release agent described above is applied onto wood in construction site conditions, it is not possible to completely prevent it from entering the environment, for example as splashes.

In addition, the treated wood products have an unpleasant smell and are unpleasant to handle. The smell clings to your skin, hair and clothing. People who use the substance and the wood products find this disagreeable.

The purpose of the present invention is to eliminate at least some of the problems associated with the known technology and to provide a new solution for treating wood surfaces which act as casting surfaces for concrete and other hardening masses (referred to below as "casting material").

The present invention is based on the idea that agents which render the wood surface hydrophobic are used as release agents, which effectively seal the surface of the wood. Reactive hydrophobing agents are such substances. They adhere to the surface of wood by reacting with functional groups in the wood. They thus form a slippery surface. Therefore, during casting, the casting material cannot penetrate into the wood fibre and thereby adhere to it.

More specifically, the use according to the present invention is mainly characterized by what is stated in the characterizing part of Claim 1.

Considerable advantages are achieved with the present invention. Thus, unlike previous solutions, raw materials that are based on fossil oils are not used in the invention. Solutions that are based on coating films, such as thermosetting resins which are impregnated into paper, or plastic films which can be laminated, are not used either.

The present invention relates to substances that act as release agents, at least as well as, and in most cases far better than, previously known solutions. In addition, the substances used in the present invention or at least part of them react with the wood, thereby adhering to the wood cells, and are not flushed out into the environment, for example when it rains. This is a significant advantage. The substances which the present invention relates to have no known environment-loading effects.

Another advantage is that the solutions are inexpensive. For example, the use of AKD in an optimal case results in a reduction of costs of at least 50 % compared to the known solutions. The substances which the present invention relates to are not known to be used in casting. In fact, their suitability for said application is very surprising. When wood is used for casting beds or casting forms, for example in the casting of concrete, the wood object is exposed to a very intense and long-term contact with water and the hardening concrete. Wood treatment tests and the use of wood in concrete casting tests, according to the present invention, gave surprisingly good results, and the reference publications mentioned in the introduction, do not refer to the fact that wood which is treated as described above could be suitable as a casting bed.

The accompanying drawings show photographs of samples described in the application examples.

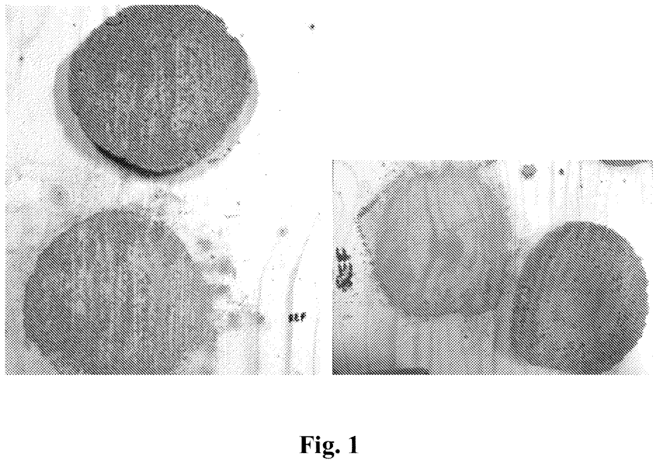

Figure 1 is a photograph of untreated softwood plywood;

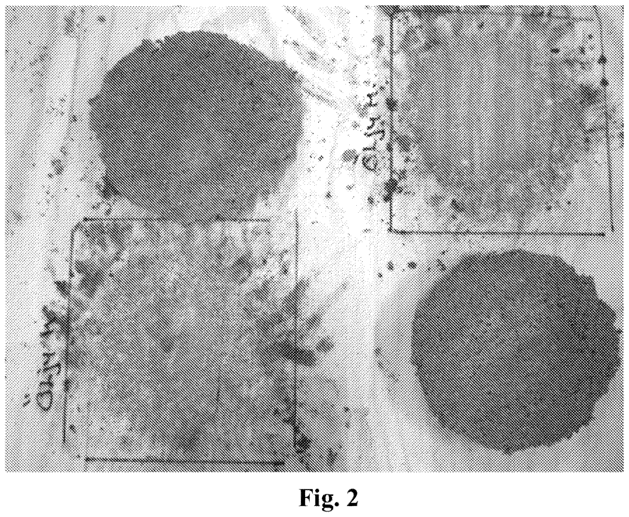

Figure 2 is a photograph of a plywood sample which is treated, according to known technology, with a fossil oil-based substance, Nytex 810 + engine fuel oil;

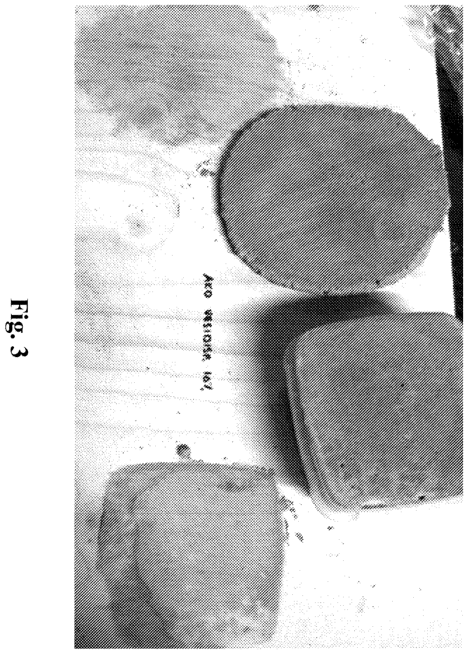

Figure 3 is a photograph of a sample which is treated with a 10 % aqueous dispersion of AKD (Ashland Aquapel 320);

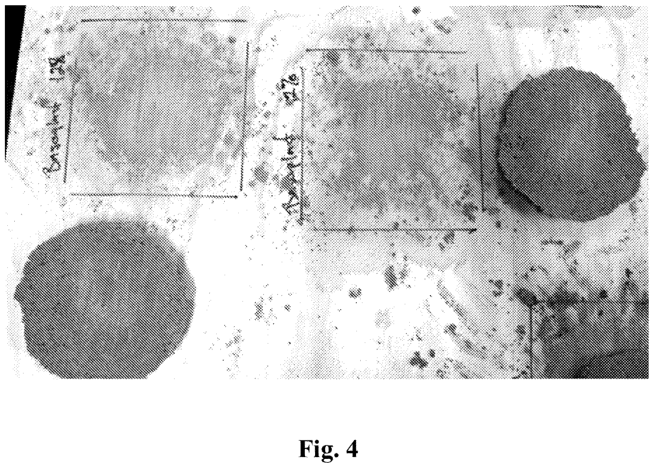

Figure 4 is a photograph of a sample which is treated with a polymer adhesive (Basoplast 285 S); and

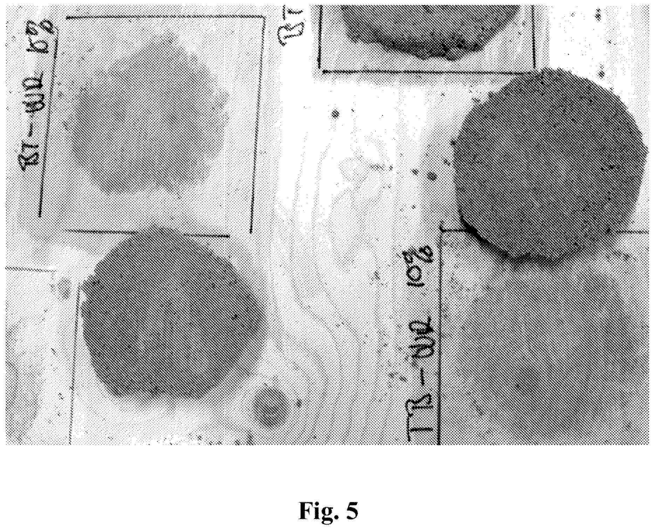

Figure 5 is a photograph of a sample which is treated with a tall pitch-based processed product (BT Water Repellent).

As will appear from the above, the present solution relates to casting bed use of a wood object which is obtained by treating a wood object with alkyl ketene dimer or alkenyl diketene dimer, i.e. AKD, an agent that increases the hydrophobicity of wood, and which agent is reacting with the wood, in particular with the hydroxyl groups or similar functional groups in the wood.

In the present solution, the substance tightly adheres to the wood and possibly at least partially adheres to the wood cells.

In one embodiment, the wood object is treated with a hydrophobic agent, by spreading, that is, by application of the agent onto the surface of the wood object at a temperature at which the agent that increases the hydrophobicity is in a fluid state, for example in a molten state.

In another embodiment, a wood object is treated with a liquid mixture which comprises an agent that increases the hydrophobicity, which agent, for example, has been added into the mixture in question, in the form of a liquid dispersion.

It is possible to treat the whole surface with a hydrophobic agent, or the agent can be applied to the surface as discrete patterns, that is, patterns which are separate from each other, such as spots, streaks or stripes. In particular, however, at least 50 %, most suitably at least 75 %, especially 90-100 % of the casting surface is treated. The corresponding part of the surface will then be covered. If the hydrophobic agent is applied onto the surface as patterns, it is preferable to arrange the pattern in such a way that it covers the surface uniformly.

In general, approximately 10-200 g/m², particularly approximately 50-120 g/m², most suitably approximately 70-100 g/m² of the hydrophobic treatment agent is applied onto the surface of a wood object.

If necessary, the reactivity of the treatment agent with the surface of the wood can be increased by including catalysts in the agent.

The agent may be in a solid state at room temperature during storage, and in a molten state, after having been heated, during application (such as AKD granulate). In addition, the agent may be a combination of the above substances, either with each other or together with another substance.

In one embodiment, a wood object is treated either with a molten form of alkyl ketene dimer or alkenyl diketene dimer, or with a liquid mixture which mixture comprises alkyl ketene dimer or alkenyl diketene dimer 1-20 % by weight, particularly approximately 5-10 % by weight.

AKD is applied onto the surface of the wood object approximately 1-30 g/m², particularly approximately 5-12 g/m², which corresponds, as an aqueous dispersion, to approximately 50-120 g/m² (of the dry matter).

It is also possible to treat the wood object with at least one such active substance, which acts to protect against the unwanted effects of fire and/or micro-organisms or insects.

Such an active substance or active substances can be applied onto the wood simultaneously with the agent that increases the hydrophobicity. For example, the procedure is that, before the application, the active substance or the active substances are mixed into a liquid intermediate substance, which comprises an agent that increases the hydrophobicity.

### Examples of suitable substances are the following:

The wood preservative can be a biocide, such as IPBC (3-iodo-2-propynylbutyl-carbamate), propiconazole, tebuconazole or cypermethrin. Alternatively, the wood preservative can be a non-biocide, such as tall oil and its derivatives, and tall oil pitch and derivatives and processed products of it.

The fire retardant can be, for example, a salt of an acid, such as formic acid, citric acid, phosphoric acid, phosphonic acid or boric acid.

The product which comprises the active substance or active substances, includes one or more wood preservatives (wood protection products), or one or more fire retardants (fire protection products). The product may also comprise both wood preservatives and fire retardants.

In one embodiment, the hydrophobic agent is applied by paint-brushing, rolling, other brushing or by spraying or immersion treatment.

In the present solution, the shape of the wood object is, for example, a board or a beam, and it can be a single piece, or the wood object can be a combination of several layers (laminate or composite).

Examples of wood objects are the following: single-piece wood boards and wood beams, wood veneer, fibre board, chipboard, lumber, glue-laminated wood, plywood, LVL (laminated veneer lumber) board or beam, or OSB (oriented strand board). Of particular interest are planar pieces, such as boards.

The treated wood surfaces can be directly used two-dimensionally, that is, for example directly as (base)plates for cast-in-situ concrete or as a surface of a casting form. However, it is possible to use them to produce desired three-dimensional structures for casting of concrete elements of various types and shapes.

Typically, the material to be cast comprises a mixture of a hydraulically hardening binder and a filler (aggregate). The binder may be, for example, clinker-based or pozzolan-based. It is known that typical binders of concrete masses are for example: Portland cement, Portland blended cement, blast furnace slag cement, pozzolan cement and blended cement, particular examples of which cements are also sulphate resistant Portland cement, Portland limestone cement and Portland blast furnace slag cement.

Due to their good detaching properties, the wood surfaces can also be used as casting surfaces for other masses that are mineral-bearing and which harden, as well as for polymer masses and composite masses.

The following non-limiting examples clarify the present invention.

### Example: Treatment of wood with a hydrophobing agent that reacts with the hydroxyl groups in the wood

An aqueous dispersion of AKD is mixed into water at a ratio of 1:1, in which case the resulting release agent solution comprises AKD approximately 10 % by weight. This solution is applied onto the surface of spruce plywood on an industrial surface treatment line.

When the AKD dries, it reacts with the hydroxyl groups in the wood and makes the wood surface highly water-repellent and, at the same time, generates a waxy layer on the surface of the wood.

Concrete casting forms are prepared using the wood board which is treated in this way. The wet concrete is poured into the forms and allowed to dry. When the concrete has dried, the form structures are dismantled, that is, the plywood parts are detached from the concrete. The plywood parts, which are treated according to the present invention, can be easily detached from the surface of the concrete, without damaging the boards or the concrete, thus the need for any repair of the concrete surface is reduced and the recycling of the boards is improved. In addition, the working safety and comfort are improved.

Casting experiments have been carried out with the spruce plywood that is treated with the AKD dispersion described above. The tests also involved other solutions which the present invention relates to, and which solutions are suitable for this example. The procedure and the results of the test are described in the following casting test.

### Casting test

This test examines the adhesion of the wood surface to the concrete. The test demonstrates well the detaching properties of the release agents. In this test, "concrete cakes" are cast onto a treated softwood-plywood surface, which cakes are detached from the surface, after drying. The detachability, the quality of the casting surface, and the amount of concrete remaining on the wood board are compared in the analysis of the results.

The most significant property with regard to the application is the detachability, that is, how easily the wood surface is detached from the casting surface.

The table below describes the results. The figures show the board surface and the concrete surface after the drying of the casting.

**Table**

| **Release agent** | **Detaching property** | **Surface quality** |
|---|---|---|
| Untreated softwood plywood | Tightly attached = poor | Many small splinters remain embedded in the concrete surface, and concrete remains on the plywood |
| Known fossil-oil-based substance Nytex 810 + engine fuel oil | Easily detached | Substantial amount of concrete remains on the plywood. Rough casting surface |
| AKD aqueous dispersion 10 % (Ashland Aquapel 320) | Very easily detached | Only a very small amount of concrete remains on the plywood. Smooth casting surfaces |
| Polymer adhesive (Basoplast 285 S) | Easily detached | Some concrete remains on the plywood. Relatively smooth casting surfaces |
| Tall-oil pitch-based processed product (BT Water Repellent) | Easily detached | Some concrete remains on the plywood. Rather rough casting surface |

### List of References

### Patent Publications

WO 2008154421
US 3,497,375
US 2009304939
WO 2009004110

## Claims

1. The use as casting bed of a wood object which is obtained by treating the surface of the wood object with an agent that increases the hydrophobicity of wood, and which agent is reacting with the wood,
**characterised in that**
the agent that increases the hydrophobicity of wood is alkyl ketene dimer or alkenyl diketene dimer.

2. The use according to Claim 1, **characterized in that** the wood object has been treated with an agent that increases the hydrophobicity of wood, and which agent is reacting with the hydroxyl groups of wood.

3. The use according to Claim 1 or 2, **characterized in that** the wood object is treated with a hydrophobic agent by applying the agent onto the surface of the wood object at a temperature at which the agent that increases the hydrophobicity is in a fluid state, for example in a molten state.

4. The use according to Claim 1 or 2, **characterized in that** the wood object is treated with a liquid mixture which comprises an agent that increases the hydrophobicity.

5. The use according to Claim 4, **characterized in that** the agent that increases the hydrophobicity is added, in the form of a dispersion, into the mixture.

6. The use according to any of the preceding claims, **characterized in that** the wood object is treated either with a molten form of alkyl ketene dimer or alkenyl diketene dimer, or with a liquid mixture which mixture comprises alkyl ketene dimer or alkenyl diketene dimer 1-20 % by weight, particularly approximately 5-10 % by weight.

7. The use according to any of the preceding claims, **characterized in that** the wood object is treated with at least one active substance which acts to protect against the unwanted effects of fire and/or micro-organisms or insects.

8. The use according to Claim 7, **characterized in that** the active substance or the active substances have been applied onto the wood simultaneously with the agent that increases the hydrophobicity of wood, for example by mixing, before the application, the active substance or the active substances into a liquid intermediate substance which comprises an agent that increases the hydrophobicity.

9. The use according to any of the preceding claims, **characterized in that** the treatment is carried out by paint-brushing, rolling, other brushing or spraying or immersion treatment.

10. The use according to any of the preceding claims, **characterized in that** the shape of the wood object is for example a board or a beam, and that the wood object is a single piece or that the wood object is a combination of several layers.

11. The use according to any of the preceding claims, **characterized in that** the wood object is a single-piece wood board or wood beam, or wood veneer, fibre board, chipboard, lumber, glue-laminated wood, plywood, LVL (laminated veneer lumber) board or beam, or OSB (oriented strand board).

12. The use according to any of the preceding claims, **characterized in that** approximately 1-30 g/m², particularly approximately 5-12 g/m² of alkyl ketene dimer or alkenyl diketene dimer (of the dry matter) has been applied onto the surface of the wood object.

13. The use according to any of the preceding claims, **characterized in that** the wood object is used as a casting bed for concrete.

## Patentansprüche

1. Verwendung eines Holzgegenstands als Gießbett, das durch Behandeln der Oberfläche des Holzgegenstands mit einem Mittel erhalten wird, das die Hydrophobie des Holzes erhöht und wobei das Mittel mit dem Holz reagiert,
**dadurch gekennzeichnet, dass** das Mittel, das die Hydrophobie des Holzes erhöht, Alkylketendimer oder Alkenyldiketendimer ist.

2. Verwendung nach Anspruch 1, **dadurch gekennzeichnet, dass** der Holzgegenstand mit einem Mittel behandelt wurde, das die Hydrophobie des Holzes erhöht, und wobei das Mittel mit den Hydroxylgruppen des Holzes reagiert.

3. Verwendung nach Anspruch 1 oder 2, **dadurch gekennzeichnet, dass** der Holzgegenstand mit einem hydrophoben Mittel durch Aufbringen des Mittels auf die Oberfläche des Holzgegenstands bei einer Temperatur behandelt wird, bei der das Mittel, das die Hydrophobie erhöht, in einem flüssigen Zustand, beispielsweise in einem geschmolzenen Zustand ist.

4. Verwendung nach Anspruch 1 oder 2, **dadurch gekennzeichnet, dass** der Holzgegenstand mit einer flüssigen Mischung behandelt wird, die ein Mittel umfasst, das die Hydrophobie erhöht.

5. Verwendung nach Anspruch 4, **dadurch gekennzeichnet, dass** das Mittel, das die Hydrophobie erhöht, in der Form einer Dispersion der Mischung zugegeben wird.

6. Verwendung nach einem der vorstehenden Ansprüche, **dadurch gekennzeichnet, dass** das Holzobjekt entweder mit einer geschmolzenen Form von Alkylketendimer oder Alkenyldiketendimer oder mit einer flüssigen Mischung behandelt wird, die Alkylketendimer oder Alkenyldiketendimer 1-20 Gew.-%, insbesondere etwa 5-10 Gew.-% umfasst.

7. Verwendung nach einem der vorstehenden Ansprüche, **dadurch gekennzeichnet, dass** der Holzgegenstand mit mindestens einem Wirkstoff behandelt wird, der wirkt, um vor den unerwünschten Auswirkungen von Feuer und/oder Mikroorganismen oder Insekten zu schützen.

8. Verwendung nach Anspruch 7, **dadurch gekennzeichnet, dass** der Wirkstoff oder die Wirkstoffe gleichzeitig mit dem Mittel, das die Hydrophobie des Holzes erhöht, auf das Holz aufgebracht werden, beispielsweise indem vor dem Aufbringen der Wirkstoffs oder die Wirkstoffe in eine flüssige Zwischensubstanz eingemischt werden, die ein Mittel umfasst, das die die Hydrophobie erhöht.

9. Verwendung nach einem der vorstehenden Ansprüche, **dadurch gekennzeichnet, dass** die Behandlung durch Pinselaufbringen, Walzen, sonstiges Bürsten oder Sprühen oder Eintauchen durchgeführt wird.

10. Verwendung nach einem der vorstehenden Ansprüche, **dadurch gekennzeichnet, dass** die Form des Holzobjekts beispielsweise ein Brett oder ein Balken ist, und dass das Holzobjekt ein Einzelstück ist, oder dass das Holzobjekt eine Kombination aus mehreren Schichten ist.

11. Verwendung nach einem der vorstehenden Ansprüche, **dadurch gekennzeichnet, dass** der Holzgegenstand eine einteilige Holzplatte oder ein Holzbalken, oder Holzfurnier, Faserplatte, Spanplatte, Schnittholz, Brettschichtholz, Sperrholz, LVL-Platte oder -Ballken (Laminated-Veneer-Lumber-Platte oder -Balken) oder OSB (Oriented Strand Board) ist.

12. Verwendung nach einem der vorstehenden Ansprüche, **dadurch gekennzeichnet, dass** etwa 1-30 g/m², insbesondere etwa 5-12 g/m² Alkylketendimer oder Alkenyldiketendimer (der Trockenmasse) auf die Oberfläche des Holzobjekts aufgebracht wurden.

13. Verwendung nach einem der vorstehenden Ansprüche, **dadurch gekennzeichnet, dass** der Holzgegenstand als Gießbett für Beton verwendet wird.

## Revendications

1. Utilisation, comme lit de coulée, d'un objet en bois qui est obtenu en traitant la surface de l'objet en bois avec un agent qui augmente le caractère hydrophobe du bois, et lequel agent réagit avec le bois,
**caractérisée en ce que** l'agent qui augmente le caractère hydrophobe du bois est un dimère d'alkylcétène ou un dimère d'alcényldicétène.

2. Utilisation selon la revendication 1, **caractérisée en ce que** l'objet en bois a été traité avec un agent qui augmente le caractère hydrophobe du bois, et lequel agent réagit avec les groupes hydroxyle du bois.

3. Utilisation selon la revendication 1 ou 2, **caractérisée en ce que** l'objet en bois est traité avec un agent hydrophobe en appliquant l'agent sur la surface de l'objet en bois à une température à laquelle l'agent qui augmente le caractère hydrophobe est dans un état fluide, par exemple dans un état fondu.

4. Utilisation selon la revendication 1 ou 2, **caractérisée en ce que** l'objet en bois est traité avec un mélange liquide qui comprend un agent qui augmente le caractère hydrophobe.

5. Utilisation selon la revendication 4, **caractérisée en ce que** l'agent qui augmente le caractère hydrophobe est ajouté, sous la forme d'une dispersion, dans le mélange.

6. Utilisation selon l'une quelconque des revendications précédentes, **caractérisée en ce que** l'objet en bois est traité soit avec une forme fondue de dimère d'alkylcétène ou de dimère d'alcényldicétène, soit avec un mélange liquide, lequel mélange comprend de 1 à 20 % en poids, en particulier approximativement de 5 à 10 % en poids d'un dimère d'alkylcétène ou d'un dimère d'alcényldicétène.

7. Utilisation selon l'une quelconque des revendications précédentes, **caractérisée en ce que** l'objet en bois est traité avec au moins une substance active qui agit pour protéger contre les effets indésirables du feu et/ou de micro-organismes ou insectes.

8. Utilisation selon la revendication 7, **caractérisée en ce que** la substance active ou les substances actives ont été appliquées sur le bois simultanément avec l'agent augmentant le caractère hydrophobe du bois, par exemple en mélangeant, avant l'application, la substance active ou les substances actives en une substance intermédiaire liquide qui comprend un agent qui augmente le caractère hydrophobe.

9. Utilisation selon l'une quelconque des revendications précédentes, **caractérisée en ce que** le traitement est réalisé par application au pinceau, au rouleau, autre brossage ou traitement par pulvérisation ou par immersion.

10. Utilisation selon l'une quelconque des revendications précédentes, **caractérisée en ce que** la forme de l'objet en bois est par exemple une planche ou une poutre, et que l'objet en bois est d'une seule pièce ou que l'objet en bois est une combinaison de plusieurs couches.

11. Utilisation selon l'une quelconque des revendications précédentes, **caractérisée en ce que** l'objet en bois est une planche en bois ou une poutre en bois d'une seule pièce, ou un placage en bois, un panneau de fibres, un panneau de particules, du bois d'oeuvre, du bois lamellé-collé, du contreplaqué, une planche ou poutre en LVL (bois de placage stratifié) ou un OSB (panneau de particules orientées).

12. Utilisation selon l'une quelconque des revendications précédentes, **caractérisée en ce qu'**approximativement de 1 à 30 g/m², en particulier approximativement de 5 à 12 g/m² de dimère d'alkylcétène ou de dimère d'alcényldicétène (de la matière sèche) ont été appliqués sur la surface de l'objet en bois.

13. Utilisation selon l'une quelconque des revendications précédentes, **caractérisée en ce que** l'objet en bois est utilisé comme lit de coulée pour le béton.
